Europäisches Patentamt

European Patent Office

Office européen des brevets

(11) Publication number: **0 513 784 A1**

## EUROPEAN PATENT APPLICATION

(21) Application number: **92108149.3**

(22) Date of filing: **14.05.92**

(51) Int. Cl.⁵: **G06F 12/08**, G06F 12/12

(30) Priority: **17.05.91 JP 112946/91**

(43) Date of publication of application:
**19.11.92 Bulletin 92/47**

(84) Designated Contracting States:
**DE FR GB**

(71) Applicant: **MITSUBISHI DENKI KABUSHIKI
KAISHA
2-2-3, Marunouchi
Chiyoda-ku Tokyo(JP)**

(72) Inventor: **Kaneko, Kazuyuki, c/o Mitsubishi
Denki K.K.
Computer-seisakusho, No. 325, Kamimachiya
Kamakura-shi, Kanagawa-ken(JP)**

(74) Representative: **Pfenning, Meinig & Partner
Mozartstrasse 17
W-8000 München 2(DE)**

(54) Cache control system.

(57) For the purpose of improving the hit ratio for
sequential access in such a system as a disk cache
system, flags are provided in the management table
5 of a cache memory 4, and are set to data blocks
pre-read by pre-read means 34. When the data
blocks having the flags set thereto are hit upon
subsequent access with transfer means 31, access
mode decision means 33 determines that sequential
access is performed, and pre-read means 34 pre-
reads data blocks after the hit blocks.

EP 0 513 784 A1

## Background of the Invention

[Field of the Invention]

The present invention relates to a cache control system, and more particularly, to the management of a cache memory in such a system as a disk cache system.

[Description of the Prior Art]

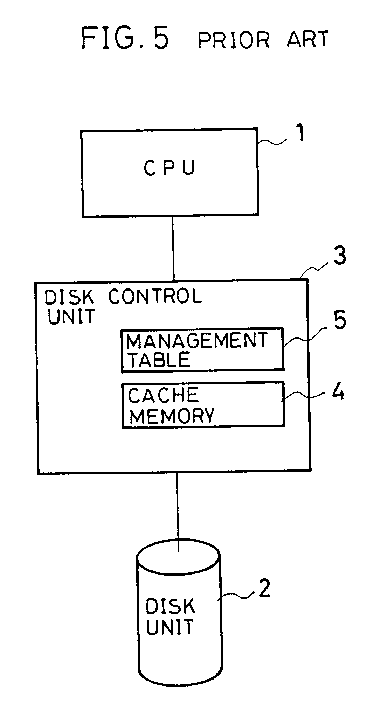

FIG.5 illustrates the configuration of a disk subsystem having a disk cache. In the figure, reference numeral 1 represents a CPU (central processing unit), 2 a disk unit which functions as an external storage device, 3 a disk control unit responsive to a command from the CPU 1 to access the disk unit 2 and transmit data stored in the disk unit 2 to the CPU 1, 4 a cache memory incorporated in the disk control unit 3, and 5 a management table for managing the cache memory 4.

The operation of the disk subsystem will be described hereafter. The disk control unit 3 which has received from the CPU 1 an instruction to read data from the disk unit 2 refers to the management table 5 and checks if the data to be read exists in the cache memory 4 or not. If the data does not exist in the cache memory, the disk control unit accesses the disk unit 2 to read the data for supply to the CPU 1 and storage in the cache memory 4. If the data exists in the cache memory 4, the disk control unit transfers the data from the cache memory 4 to the CPU 1 without accessing the disk unit 2.

Since reading data from the disk unit 2 involves a mechanical operation, it takes about several tens of milliseconds to read data. However, reading data from the cache memory 4 can be performed almost instantaneously.

In this way, the use of the cache memory 4 can seemingly speed up access to the disk unit 2.

However, since the capacity of the cache memory 4 is limited, it is desirable to leave data which is likely to be accessed next in the cache memory 4 to increase the probability (hit ratio) that the accessed data is existent in the cache memory 4.

It is generally difficult to predict data likely to be accessed. Therefore, the least recently used (LRU) algorithm of the most recently used data most likely to be accessed is commonly used.

For example, in a technology disclosed in Japanese Laid-Open Patent Publication No.63-4356, continuous areas are accessed successively in case of sequential access. Since, when a certain area is accessed, it is effective to pre-read subsequent areas at the same time, the CPU 1 sets a sequential mode and sends a read-out request to the disk control unit 3. The disk control unit 3 which has received the request stores data read from the disk unit 2 in the cache memory 4 even after having read the data from the disk unit 2 for supply to the CPU 1, thus making it possible to improve the hit ratio for access to continuous areas.

However, as this system requires the setting of an access mode for access to a disk unit, a software interface must be changed. In addition, the conventional system (program) has the problem that it is impossible to incorporate an high-efficiency disk cache for sequential access.

## Summary of the Invention

The present invention has been worked out to overcome the problem described above, and it is an object of the present invention to provide a cache control system which can improve the cache hit ratio for sequential access through the detection of sequential access with a disk control unit without changing a software interface and which enables the effective use of a cache memory.

Therefore, a cache control system of the first invention comprises the following elements:

(a) a cache memory for storing the data of an external storage device temporarily,

(b) transfer means responsive to a data transfer request to transfer data from either the external storage device or the cache memory,

(c) access mode decision means for determining whether the data transfer request indicates sequential access or not, and

(d) pre-read means for pre-reading a predetermined volume of data from the external storage device for storage in the cache memory when the access mode decision means determines that the data transfer request indicates sequential access.

A cache control system of the second invention comprises the following processes:

(a) a transfer process for transferring data from either the cache memory or the external storage device,

(b) a pre-read process for pre-reading data from the external storage device at least when the data is transferred from the external storage device in the transfer process or when predetermined data out of pre-read data is transferred, and

(c) a link process for changing the retention priority order of the data in the cache memory depending on whether the transferred data is pre-read data in the pre-read process or not.

The access mode decision means of the first invention described in the foregoing determines whether the data transfer request indicates sequential access or not. Since, in case of a sequential access mode, the pre-read means pre-reads data from the external storage device for storage in the cache memory, the hit ratio for sequential access can be improved.

In the pre-read process of the second invention, pre-reading data is performed upon access to the external storage device, and data following the preread data is pre-read when the pre-read data is accessed. Since, in the link process, a cache block which stores the pre-read data after use is first released, the hit ratio can be improved. Furthermore, this block can be used to store other data because the block once accessed is released immediately.

The above and other objects, features and advantages of the invention will become more apparent from the following description when taken in conjunction with the accompanying drawings.

Brief Description of the Drawings

FIG.1 is a block diagram of a cache control system of the present invention;
FIG.2 illustrates the configuration of a management table of the present invention;
FIG.3 is a flow chart of the operation of the cache control system of the present invention;
FIG.4 illustrates an embodiment of the present invention; and
FIG.5 illustrates a conventional disk subsystem comprising a cache memory.

Description of the Preferred Embodiment

Embodiment 1

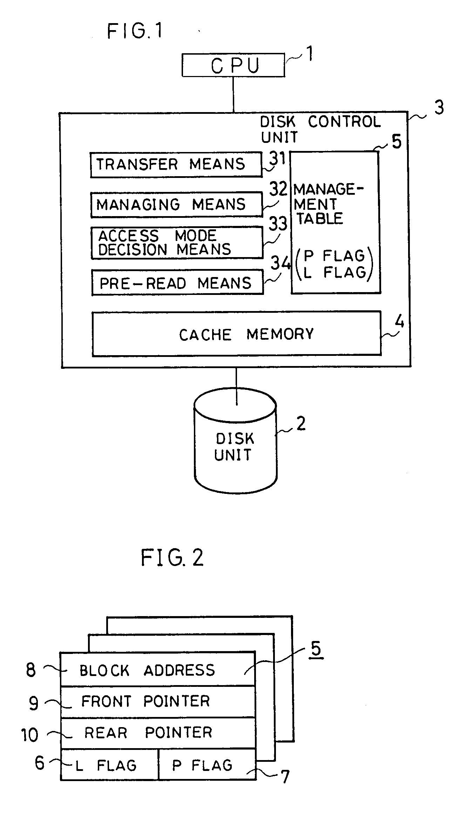

With reference to the accompanying drawings, an embodiment of the present invention will be described hereafter. In FIG. 1, reference numerals 1 to 5 represent the same components as the prior art. Reference numeral 31 represents transfer means responsive to a data transfer request from the CPU 1 to transfer data from either the disk unit 2 or the cache memory 4, 32 management means for generating, changing and releasing each block of the management table 5, 33 access mode decision means for determining whether a data transfer request from the CPU 1 indicates sequential access or not, and 34 pre-read means for prereading data from the disk unit 2 when the data transfer request from the CPU 1 indicates sequential access.

FIG.2 illustrates details of the management table 5 of the cache. The quantity of the management table 5 corresponds to the number of blocks which are the management units of the cache. 8 represents a block address for managing data in block stored in the cache memory. 9 and 10 represent front and rear pointers which constitute a link for implementing the LRU algorithm. 7 represents a P (prefetched) flag set to pre-read data. 6 indicates an L (last) flag set only to a block which is followed by non-pre-read data blocks.

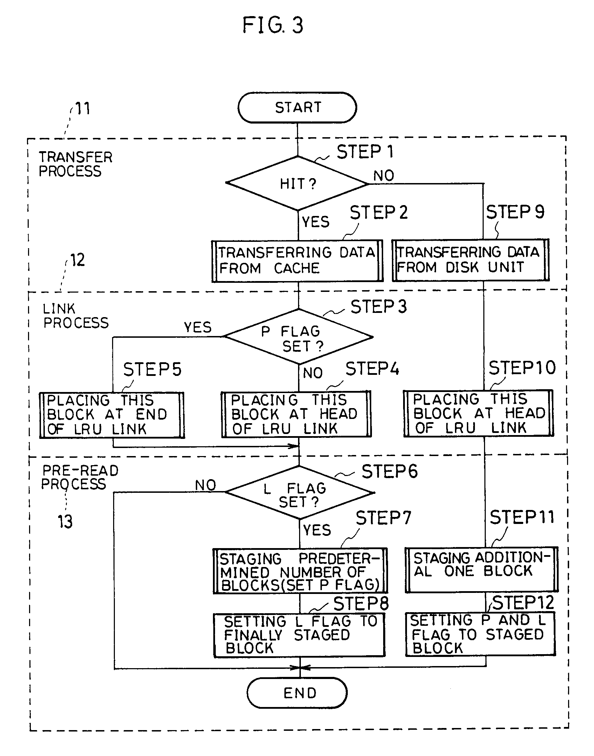

With reference to the flow chart of FIG.3, there will be described the operation of the cache control system on condition that all read-out requests from the CPU 1 are performed in units of data blocks of the cache for simplification. In the figure, reference numeral 11 indicates a transfer process, 12 a link process, and 13 a pre-read process.

When the disk control unit 3 receives a read-out request from the CPU 1, the transfer means 31 determines whether there is data to be read in the cache memory 4 (step 1), and when the data is hit, the data is transferred from the cache memory 4 (step 2).

At this time, the management means 32 which changes the LRU link checks the P flag (step 3). When the P flag is not set, the transferred data is considered as data accessed at random, and this data block is placed at the head of the link (step 4). When the P flag is set, the data is considered as data accessed sequentially, and the data block is placed at the end of the link (step 5). The cache memory 5 is filled to capacity with the block placed at the end of the link, and the block is the first data of the cache memory to be erased in the order from old to new.

Then, the access mode decision means 33 checks if the L flag is set to this block (step 6). When the flag is set, the means determines that sequential access is performed. The pre-read means 34 pre-reads several blocks at a time after clearing the L flag set to the block, and sets the P flag to all of the pre-read blocks (step 7). Finally, the means sets the L flag only to a final pre-read block (step 8), whereby data to be sequentially accessed next time can be hit.

The transfer means 31 transfers data from the disk unit (step 9) when the data is mishit in step 1. At this time, the managing means 32 places this block at the head of the LRU link (step 10), and the pre-read means 34 pre-reads only one block and sets both P and L flags to the block (steps 11 and 12).

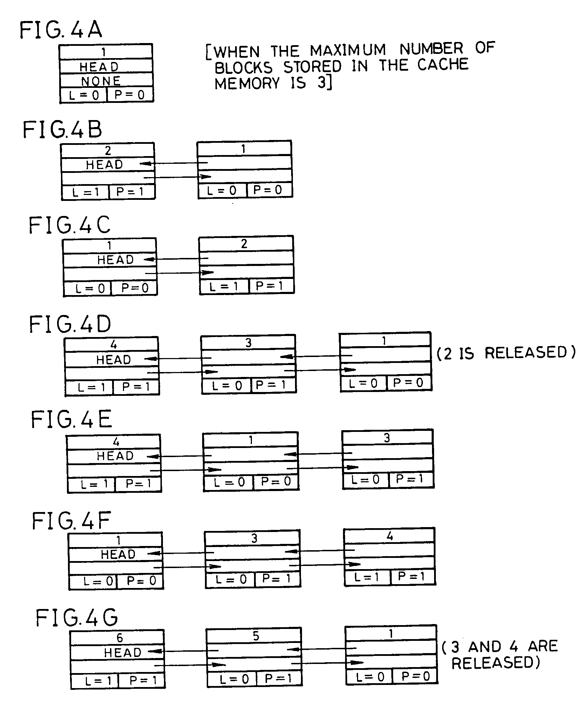

Then, an example of the operation will be described with reference to FIGs.4A to 4G. For simplification, the maximum number of blocks to be stored in the cache memory 4 is 3, and the cache memory 4 is unused at the start of operation. The case where sequential access is performed at the start of operation will be described.

First, the CPU 1 sends a request to transfer the first data to be sequentially accessed to the disk control unit 3. The data is transferred from the CPU 1 in steps 1 and 9, and held in the cache memory 4 and the management table 5 as a block 1 in step 10. FIG.4A shows the state of the management table at this time. Thereafter, a block 2 is pre-read and held in the management table 5 as a block having both P and L flags in steps 11 and 12 as shown in FIG.4B.

Then, when the CPU 1 sends a request to transfer the block 2, the data held in the block 2 is transferred from the cache memory 4 to the CPU 1 in steps 1 and 2. In steps 3 and 4, this block is placed at the end of the LRU link as shown in FIG.4C.

Thereafter, in steps 6, 7 and 8, the next two blocks are pre-read because the L flag is set to the block 2, and blocks 3 and 4 are held in the cache memory 4 and the management table 5. The block 3 has a P flag but not an L flag, while the block 4 has both P and L flags. At this time, as the maximum number of blocks to be held in the cache memory 4 is 3, the last block of the LRU link, the block 2, is erased to hold the blocks 3 and 4. FIG.4D shows this state.

When the CPU 1 sends a request to transfer the next data again, the block 3 is transferred in steps 1 and 2, and placed at the end of the LRU link in steps 3 and 5 as shown in FIG.4E. In step 6, the block 3 goes straight to the end of the operation since an L flag is not set to the block 3.

Then, when the CPU 1 sends a request to transfer the next data, the block 4 is transferred in steps 1 and 2, and placed at the end of the LRU link as shown in FIG.4F in steps 3 and 5. In step 6, the next two blocks are pre-read since an L flag is set to the block 4. A block 5 is held as a block having a P flag and not an L flag, and a block 6 as a block having both P and L flags. At this time, the cache memory is filled to capacity, and accordingly, the blocks 3 and 4 are erased. FIG.4G shows this state.

If the CPU 1 stops sequential access and tries to access non-serial data, and the data exists in the cache memory 4, the procedure from step 1 to steps 2, 3, 4 and 6 is undertaken, while if the data exists in the disk unit 2, the procedure from step 1 to steps 9, 10, 11 and 12 is undertaken.

As understood from this example, both L and P flags are used as a flag for determining sequential access. However, the L flag determines whether pre-reading is performed or not, while the P flag determines whether the data is pre-read data or not and whether the data may be erased from the cache memory after use or not.

As described in the foregoing, with reference to this embodiment, there has been explained a disk cache control system wherein, in a disk cache system, when data stored in the cache memory is mishit, a predetermined volume of data is pre-read upon staging, and a flag is set to the last pre-read data. When the data having this flag set thereto is hit, it is determined that sequential access is performed, and data blocks which follow the last pre-read data are pre-read at the same time.

The disk cache control system is characterized in that flags are set to all of the pre-read data blocks, and when a data block having a flag set thereto is hit, it is determined that sequential access is performed, and the block is the first to be erased.

## Embodiment 2

In the above embodiment, an L flag is set to the last pre-read block. However, the flag may be set to a block before the last pre-read block or a block followed by several pre-read blocks including the last one, and when this block is hit, pre-reading may be performed from the block before the last pre-read block or followed by several pre-read blocks including the last one.

## Embodiment 3

In the previous embodiment, an L flag and a P flag are set to pre-read data for the access mode decision means to determine whether sequential access is performed or not. However, both flags do not need to be set, and the setting of only one flag will suffice. Particularly, the disk control system of the first invention needs only the L flag.

## Embodiment 4

In the previous embodiment, the access mode decision means uses a flag/flags to determine whether sequential access is performed or not. Other methods may be used to determine whether sequential access is performed or not. For example, the address of data accessed previously could be stored and compared with the address of data accessed this time to determine whether sequential access is performed or not. In this way, the access mode decision means automatically determines whether sequential access is performed or not without modifying existing system software.

As described in the foregoing, according to the first and second inventions, when sequential access is detected, pre-reading is performed, whereby the hit ratio for sequential access is improved.

Furthermore, according to the second invention, when a pre-read data block is hit, the block is released immediately so that other data can be stored in this block, thus making possible the effective use of a cache memory.

**Claims**

1. A cache control system comprising:

(a) a cache memory for temporarily storing the data of an external storage device,

(b) transfer means responsive to a data transfer request to transfer data from either the external storage device or said cache memory,

(c) access mode decision means for determining whether the data transfer request indicates sequential access or not, and

(d) pre-read means for pre-reading a predetermined volume of data from the external storage device for storage in said cache memory when said access mode decision means determines that the data transfer request indicates sequential access.

2. The cache control system according to claim 1, wherein the system comprises management tables for managing said cache memory in units of blocks, and managing means for generating, changing and releasing each block of said management table.

3. The cache control system according to claim 2, wherein said management table has a flag set only to a pre-read data block out of pre-read data blocks which is followed by non-pre-read data blocks or by several pre-read data blocks and non-pre-read data blocks.

4. A cache control system comprising:

(a) a transfer process for transferring data from either a cache memory or an external storage device,

(b) a pre-read process for pre-reading data from the external storage device at least when the data is transferred from the external storage device in the transfer process, or when predetermined data out of data having been pre-read previously is transferred, and

(c) a link process for changing the retention priority order of the transferred data in said cache memory depending on whether the transferred data is pre-read data in the pre-read process or not.

5. The cache control system according to claim 4, wherein the system comprises management tables for managing said cache memory in units of blocks, and managing means for generating, changing and releasing each block of said management table.

6. The cache control system according to claim 5, wherein said management table has a flag set to pre-read data.

7. The cache control system according to claim 5, wherein said management table has a flag set only to a pre-read data block out of pre-read data blocks which is followed by non-pre-read data blocks or by several pre-read data blocks and non-pre-read data blocks.

FIG.1

FIG. 2

FIG. 3

FIG. 4A

| 1 |
| HEAD |
| NONE |
| L = 0 | P = 0 |

[WHEN THE MAXIMUM NUMBER OF BLOCKS STORED IN THE CACHE MEMORY IS 3]

FIG. 4B

| 2 | | 1 |
| HEAD | | |
| | | |
| L = 1 | P = 1 | L = 0 | P = 0 |

FIG. 4C

| 1 | | 2 |
| HEAD | | |
| | | |
| L = 0 | P = 0 | L = 1 | P = 1 |

FIG. 4D

| 4 | | 3 | | 1 |
| HEAD | | | | |
| | | | | |
| L = 1 | P = 1 | L = 0 | P = 1 | L = 0 | P = 0 |

(2 IS RELEASED)

FIG. 4E

| 4 | | 1 | | 3 |
| HEAD | | | | |
| | | | | |
| L = 1 | P = 1 | L = 0 | P = 0 | L = 0 | P = 1 |

FIG. 4F

| 1 | | 3 | | 4 |
| HEAD | | | | |
| | | | | |
| L = 0 | P = 0 | L = 0 | P = 1 | L = 1 | P = 1 |

FIG. 4G

| 6 | | 5 | | 1 |
| HEAD | | | | |
| | | | | |
| L = 1 | P = 1 | L = 0 | P = 1 | L = 0 | P = 0 |

(3 AND 4 ARE RELEASED)

8

## FIG. 5 PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 296 430 (IBM CORP.) | 1,2 | G06F12/08 |
| A | * column 2, line 26 - column 3, line 33 * | 4-6 | G06F12/12 |
| | * column 4, line 33 - column 8, line 48; figures * | | |
| | --- | | |
| X | EP-A-0 301 211 (IBM CORP.) | 1,2 | |
| A | * Abstract * | 4,5 | |
| | * page 3, line 54 - page 11, line 6; figures * | | |
| | --- | | |
| X | IBM TECHNICAL DISCLOSURE BULLETIN | 1,2 | |
| | vol. 24, no. 3, August 1981, NEW YORK, US | | |
| | pages 1559 - 1562; | | |
| | B.T.BENNETT ET AL.: 'Improving Performance of | | |
| | Buffered DASD to which some references are | | |
| | Sequential' | | |
| A | * page 1559, line 6 - page 1561, line 22 * | 4,5 | |
| | ----- | | |

TECHNICAL FIELDS
SEARCHED (Int. Cl.5)

G06F

The present search report has been drawn up for all claims

| Place of search | Date of completion of the search | Examiner |
|---|---|---|
| THE HAGUE | 12 AUGUST 1992 | SEMPLE M. |

EPO FORM 1503 03.82 (P0401)